# EUROPEAN PATENT APPLICATION

(11) **EP 1 582 952 A2**
(43) Date of publication of application: **05.10.2005**
(21) Application number: 05007226.3
(22) Date of filing: 01.04.2005
(51) Int. Cl.: G05B 19/418

(54) **Location based material handling and processing**

(30) Priority: 01.04.2004 US 816367
(71) Applicant: Rockwell Automation Technologies, Inc., Mayfield Heights, OH 44124 (US)
(72) Inventor: Fachmin, David, W., Grafton WI 53024 (US); Vasko, David, Alan, Macedonia OH 44056 (US); Batke, Brian A., Novelty OH (US); Noonen, Daniel, P., Mentor OH 44060-1964 (US); Callaghan, David, Michael, Concord OH 44070 (US); Baier, John, Joseph, Mentor OH 44060 (US); Tutkovics, Scot, A., Sagamore OH 44067 (US)
(74) Representative: Jung HML

(57) **Abstract**

A method and apparatus for controlling resources integrated to perform a process on a work product within an environment where at least one of a first of the resources and the work product is a moveable item that moves during the process, the method comprising the steps of providing an information device on the moveable item, ascertaining the location of the information device and controlling at least a first of the resources as a function of the location of the information device.

For instance, in one example, a drill press may be activated to form a hole in a work product when an information device on the work product is at a specific position with respect to the drill station.

## Description

### CROSS-REFERENCE TO RELATED APPLICATIONS

Not applicable.

### STATEMENT REGARDING FEDERALLY SPONSORED RESEARCH OR DEVELOPMENT

Not applicable.

### BACKGROUND OF THE INVENTION

This invention relates generally to methods and apparatus for use in automated facilities and more specifically to systems that control automated equipment as a function of the locations of materials and the equipment itself.

This section of this document is intended to introduce various aspects of art that may be related to various aspects of the present invention described and/or claimed below. This section provides background information to facilitate a better understanding of the various aspects of the present invention. It should be understood that the statements in this section of this document are to be read in this light, and not as admissions of prior art.

Mass production techniques have evolved over time such that massive amounts of product can be produced extremely efficiently and in minimal time. Machine line automation has been a particularly important mass producing technology that has driven costs down and minimized production mistakes. To this end, an exemplary automated machine line includes a plurality of work stations arranged along one or more transfer lines where the lines transfer work product form one station to the next. Machines (e.g., drills, mills, sprayers, soldering machines, clamps, component mounting robots, etc.) at each station perform various sub-processes that together comprise a complete process required to provide a final product.

In addition to machines, each station typically includes a plurality of sensors and actuators that are linked to programmable logic controllers (PLCs) via a communication network where the PLCs run programs to control the machines and to sequence machine activities along the transfer line. In this regard, the PLC programs use signals from the sensors as inputs and provide signals as outputs to the actuators.

In most cases, automated line PLCs are programmed to perform a single process to manufacture a single type of work product. Thus, for instance, a line may include twenty different stations including a first loading station and a final unloading station where the same type of initial product is always loaded at the loading station, the PLCs control the machines at each of the line stations to perform identical sub-processes on each product and then essentially identical final products are unloaded at the unloading station.

Hereinafter, unless indicated otherwise, the following discussion will be focused on an exemplary automobile seat manufacturing facility where machines and, in at least some cases, technicians, integrate seat components together to form various types of automobile seats. Thus, for instance, a first seat may be a standard upright seat having a first shape, no moveable parts and an inexpensive fabric cover, a second seat may have a second contoured shape and may include seven motors for multi-position adjustment, a heating element, a moveable headrest and that is covered in top grain leather, a third seat may include a manual pull for reclining the seat, a mid-grade fabric and a pull for sliding the seat forward and backward. Here other seat types are also contemplated that may have various combinations of features and it is contemplated that each of the seats may be provided in several different colors.

While automated systems produce undifferentiated products exceptionally well (i.e., a single type of computer), automated systems are not easily adaptable to produce customized or differentiated products. For instance, in the case of the seat example above, while one seat may require the full compliment of motors, another seat may not require any motors while still another seat may require a set of manual internal cables to facilitate reclining and forward-reverse motion. Where customization is required, the typical solution has usually been to provide more than one automated line or sub-line and/or to have technicians facilitate the customizing portions of the processes. For instance, to produce the first (i.e., basic or standard) and second (i.e., fully automated high end) seat types described above, one solution has been to provide two different lines, one for the first seat type and another for the second seat type. Another solution has been to provide a first line to manufacture elements that are common to the two seat types, a second line to add features that are only included in the standard seat design and a third line to add features that are only included in the high end seat. In either of the two above cases, even though the major portions of the process are automated, usually a technician performs some part of the process. For instance, where a line produces a high end seat that may be any of five different colors, a technician may be provided to load seat material into the fabric attaching machine, the technician selecting which color material to be placed on each seat.

One other way to facilitate customization is to perform more process steps along a manual line. For instance, in at least some cases a technician may, after selecting the fabric type to be installed on a seat, actually perform the seat fabric installation process including a stitching or gluing process where required. Yet one other solution for producing seats having different characteristics has been to configure a line to produce a large number of a first seat type and then re-configure the line to produce a large number of a second seat type, and so on.

While past automated systems have attempted to strike a balance between automation and customization to provide an acceptable number of choices to customers, unfortunately, past systems have several shortcomings. First, despite efforts to provide choices to customers, in many cases customer choice is still relatively limited due to inability to automate the customization process. Thus, for instance, rather than allowing a customer to select from all seat fabric types for a standard seat, many automobile companies only offer a small number (e.g., 2-3) of different colors of a single fabric type for a standard seat. Similarly, to obtain heated seats a customer typically has to upgrade to a high end seat instead of obtaining a heating element in a low end standard seat.

Second, inflexibility of lines often means that a company can lose revenue when a product manufactured on the line does not sell well. To this end, a typical machine line is extremely expensive to design, construct and render operational. Because machine lines are expensive, where demand for an end product is less than expected, the costs of designing and constructing the line may not be offset by revenue attributable thereto. For instance, where a specific seat is designed for use in a certain type of automobile and the specific type of automobile does not sell well, the line may not be fully utilized and the company owning the line may sustain a financial loss. While line resources can often be reconfigured to produce other product types, reconfiguration is extremely costly and time consuming and therefore, only in rare cases, is considered a viable option.

Third, some line machines may not be fully utilized despite full operation of a machine line. For instance, in the case of a seat machine line, a drill press at a twelfth station that drills holes in a seat frame may require far less time to perform its process than a machine that installs motors at an eleventh station or a machine that installs fabric seat covers at a thirteenth station. Here, while the drill press is required to perform its function, even during full line operation, the drill press will remain underutilized while waiting for the line to transfer a seat assembly from the eleventh station after motor installation and may have to wait for an assembly to be moved from the thirteenth station prior to transfer thereto.

As another instance, a drill press at the twelfth station may have to drill fifteen holes in each seat frame transferred to the station and the total process of drilling a first of the holes, moving the drill head to the location to drill the second hole, drilling the second hole, moving the head to the location to drill the third hole, and so on, may take 40 seconds. In addition, transfer of a first frame from the drill station and of a second frame to the drill station may require another 7 seconds (i.e., a transfer period is 7 seconds). Here, if seat frames are provided by the eleventh station at different rates (e.g., sometimes one per every 55 seconds, some times one every 10 seconds), the drill station may be underutilized at times (e.g., when the frames are provided every 55 seconds) while waiting for the next frame to be delivered and, at other times (e.g., when the frames are provided every 10 seconds), may itself slow down the overall line process as frames become bottle necked at the drill station. Where the drill station cannot keep up with the rate at which frames are provided thereto, machines at stations that follow the drill station and that may be fully utilized during normal rates of product flow, may be underutilized at times.

Fourth, where technicians are required to perform processes, as with any endeavor in which humans are involved, inevitably, mistakes are made. For instance, in the case of a seat line where left and right lumbar support pads are manually added to a seat product or are fed into an automated machine, where the left and right pads are inadvertently manually placed in the wrong sides of the seat or are fed incorrectly into the automated machine, imperfect product results. While such an error may, at first blush, appear to be easy to correct, if the error is not identified quickly and additional components (e.g., motors, other pads, seat fabric covers, etc.) are added to the seat or processes are performed, the cost to correct the error typically increases appreciably and, in some cases, the resulting product may not be cost effectively salvageable.

Fifth, while most line stations require some way to determine the precise locations of products and machine components during line operation, sensors are a relatively expensive solution for several reasons. In addition to hardware costs, other sensor costs typically include the costs associated with installing the sensors (some times several thousand per line), manually associating sensors with PLC program inputs, repair and maintenance costs and costs associated with line down time when a sensor fails or is damaged.

Therefore, it would be advantageous to have a flexible automated system that facilitates greater product customization, that increases asset utilization and that, in at least some cases, can verify that intended product differentiation occurs.

### BRIEF SUMMARY OF THE INVENTION

Certain aspects commensurate in scope with the originally claimed invention are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

It has been recognized that, in at least some applications, a separate information device may be provided for each moveable item within a facility that can be used to determine the location of the item within the facility. After item location is determined, in some embodiments, facility resources (i.e., line machines) are controlled as a function of the item locations. Thus, for instance, in one example, a drill press may be activated to form a hole in a seat frame when an information device on the seat frame is at a specific position with respect to the drill station and there is no need for a separate sensor for determining the seat position. As another instance, the drill press may also include a single information device that can be used to determine when the press is parked, in a partially extended position, in a fully extended position, so that the single device can be used to replace multiple position sensors (i.e., a parked sensor, a partial extend sensor, a full extend sensor, etc.).

As another example, in at least some cases, it is contemplated that multiple parallel stations may be provided for line stations that perform relatively long processes. For instance, where a seat fabric installing station requires three times as much time as the next slowest station along a line, in some cases three separate fabric installing stations may be provided in parallel where the station preceding the installing station feeds a branching transfer line station that may feed any one of the installing stations. Here, which installing station to feed a next seat assembly may be controlled by determining the locations of seat assemblies at each of the installing stations. Thus, where the first and second parallel installing stations are backlogged but the third station is free, a PLC may cause the next seat assembly to be transferred to the third station.

As one other example, it is contemplated that, in at least some embodiments, certain machines or stations may be moveable along a section of a line with respect to product to be moved there along to increase asset utilization. For instance, where the rate of product provided by a station that precedes a drill press varies between a rate at which the drill press is underutilized and a rate at which the drill press creates a backlog, the drill press may be mounted to slide along a space between the preceding and following stations to reduce the required transfer time and thereby reduce the bottleneck effect caused by the press. Here, press and product information device positions movement may be aligned or, in some cases, may be used to roughly align the press and the product after which some other components may be used to facilitate precise alignment.

In at least some cases, in addition to determining the device location, the information device may also be useable to determine the identity of the item and to control the automated process as a function thereof. In the case of a seat manufacturing line, it is contemplated that where at least basic seat components are the same for several seat types (e.g., standard, fully functional, etc.), a single line may automatically modify control as a function of a specification associated with a specific seat. Thus, when the presence of a specific seat at a station is identified, a PLC may access an associated specification and cause one of several different processes to be performed on the seat. For instance, at a seat cover installing station, the covers to be installed may be different for a fully functional seat that includes motors than for a standard seat that does not include motors. Here, the PLC is programmed to identify the correct covers to install and then to install the correct covers.

As another example, where fully functional seats need a series of motors and standard seats do not require a series of motors, a transfer line splitting station may be controlled to transfer all fully functional seats to a sub-line that installs motors and associated cushions and to transfer all standard seats to a sub-line that does not install motors, but installs a standard set of seat cushions. After motors and cushions are installed, the two sub-lines may again converge to feed a first of several cover installation stations and then a stitching station, in this case information (i.e., location and seat identity) from the information devices is used to determine which of the two sub-lines a seat assembly should be directed to, the types of covers that should be added to the seat assemblies, the types of stitching to be applied to the covers, and so on.

Consistent with the above comments, at least some embodiments of the invention include a method for controlling resources integrated to perform a process on a work product within an environment where at least one of a first of the resources and the work product is a moveable item that moves during the process, the method comprising the steps of providing an information device on the moveable item, ascertaining the location of the information device and controlling at least a first of the resources as a function of the location of the information device.

In addition some embodiments include a method for verifying that a component is a first component prior to integrating the component with a product assembly, the method comprising the steps of providing a separate information device on each of at least a subset of components and on the product assembly where each of the information devices indicates the identity of the component/assembly on which the device is located, specifying that the first component is to be integrated with the assembly at a first station, when the assembly is located at the first station, identifying the assembly via the information device on the assembly and the specified integration of the first component with the assembly and, when a component is present at the assembly to be integrated with the assembly and prior to integrating the component with the assembly, determining the identity of the component via the information device on the component and integrating the component with the assembly only when the component is the first component.

Other embodiments include a method for verifying that components to be integrated by a machine line station within an enterprise are the correct components prior to integration, the method comprising the steps of providing a separate information device on each component within the enterprise where each of the information devices indicates the identity of the component on which the device is located, specifying that a first component is to be integrated with a second component at a first station, when the first component is located at the first station, identifying the identities of the first and at least another component at the first station via the information devices prior to integrating the components and, when the another component is other than the second component, performing a secondary function.

Moreover, some embodiments include a method for tracking work product within an environment, the method comprising the steps of providing environment information within the environment from which information device location can be ascertained, providing an information device on each of the products, at least periodically obtaining environment information via each of the information devices and using the environment information to determine the locations of the information devices within the environment.

The invention further includes a method for tracking components within an environment wherein resources assemble the components to form products, the method comprising the steps of providing an information device on each of at least a sub-set of the components within the environment, determining the locations of each of the sub-set components and storing the location of each component in the information device that is on the component.

In addition, some embodiments include an apparatus for tracking a component within an environment wherein resources assemble the component with other components to form products, the apparatus comprising a processor spatially associated with the component, a data collector linked to the processor, the collector obtaining information from the environment from which collector location can be determined and a memory linked top the processor, the processor storing current collector location within the memory.

Moreover, some embodiments include an assembly for tracking components within an environment wherein resources assemble the components to form products, the assembly comprising a server linked to at least a sub-set of the resources and programmed to control resources as a function of the locations of components within the environment and a plurality of tags, a separate tag spatially associated with each of the components, wherein, at least one of the tags and the server is programmed to determine the locations of the tags within the environment.

These and other objects, advantages and aspects of the invention will become apparent from the following description. In the description, reference is made to the accompanying drawings which form a part hereof, and in which there is shown an embodiment of the invention. Such embodiment does not necessarily represent the full scope of the invention and reference is made therefore, to the claims herein for interpreting the scope of the invention.

### BRIEF DESCRIPTION OF THE SEVERAL VIEWS OF THE DRAWINGS

The invention will hereafter be described with reference to the accompanying drawings, wherein like reference numerals denote like elements, and:

Fig. 1 is a schematic diagram of an exemplary facility in which the inventive method and apparatus may be employed;

Fig. 2 is a schematic diagram of a first section of the first machine line of Fig. 1;

Fig. 3 is a schematic diagram of a second section of the first machine line of Fig. 1;

Fig. 4 is a perspective view of an exemplary wireless information device according to at least one embodiment of the present invention;

Fig. 5 is a schematic diagram of components of the information device of Fig. 4;

Fig. 6 is a schematic diagram illustrating an exemplary database table according to one aspect of the present invention;

Fig. 7 is a flowchart illustrating a method according to one embodiment of the present invention;

Fig. 8 is a flowchart illustrating a sub-process that may be substituted for one of the process blocks of Fig. 7;

Fig. 9 is a sub-process similar to the sub-process of Fig. 8 that may be substituted for one of the process blocks of Fig. 7;

Fig. 10 is a schematic diagram illustrating an exemplary drill assembly station and a seat assembly in one relative juxtaposition;

Fig. 11 is similar to Fig. 10, albeit illustrating the drill assembly and seat assembly in another relative juxtaposition;

Fig. 12 is a flowchart illustrating a method according to one other embodiment of the present invention;

Fig. 13a is a schematic diagram illustrating a drill press assembly including a wireless information device for identifying the location/position of the drill assembly according to one aspect of the present invention; Fig. 13b is similar to Fig. 13a, albeit with the drill assembly in a partial extend position; Fig. 13c is similar to Fig. 13a, albeit with the drill assembly in a full extend position;

Fig. 14 is a schematic diagram illustrating a drill assembly station according to yet another aspect of the present invention with the drill assembly located at a first substation;

Fig. 15 is similar to Fig. 14, albeit with the drill assembly located at a second substation;

Fig. 16 is similar to Fig. 14, albeit with the drill assembly illustrated a third substation;

Fig. 17 is similar to Fig. 14, albeit with the drill assembly again located at the second station;

Fig. 18 is a schematic diagram illustrating a drill assembly station according to one additional aspect of the present invention;

Fig. 19 is a flowchart illustrating a sub-process that may be substituted for one of the process blocks of Fig. 7 that provide a process to be used with the assembly of Fig 18; and

Fig. 20 is yet one additional method consistent with certain aspects of the present invention.

### DETAILED DESCRIPTION OF THE INVENTION

One or more specific embodiments of the present invention will be described below. It should be appreciated that in the development of any such actual implementation, as in any engineering or design project, numerous implementation-specific decisions must be made to achieve the developers' specific goals, such as compliance with system-related and business related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Hereinafter, unless indicated otherwise, a labeling convention will be adopted in order to simplify this explanation. To this end, according to the adopted labeling convention, any letter or number followed by a subscripted number will indicate a specific instance of a component, signal or position associated with the preceding letter or number. For example, an "M" followed by a subscripted number "1" will be used hereinafter to refer to a first machine line, an "M" follwed by the number "2" will be used to refer to a second machine line, and so on. In addition, a subscript "a" will be used to refer to a component or position associated with a product assembly (e.g., a seat frame in the present example), a subscript "d" will be used to refer to a component or position associated with a drill assembly and a subscript "s" will be used to identify a position or a component associated with a stationary proximity or position sensor.

The invention is described herein in the context of a simplified exemplary manufacturing facility and more specifically, in the context of a machine line for performing at least some process steps required to manufacture automobile seats. Nevertheless, it should be appreciated that the present inventions are also applicable to other manufacturing and material handling applications.

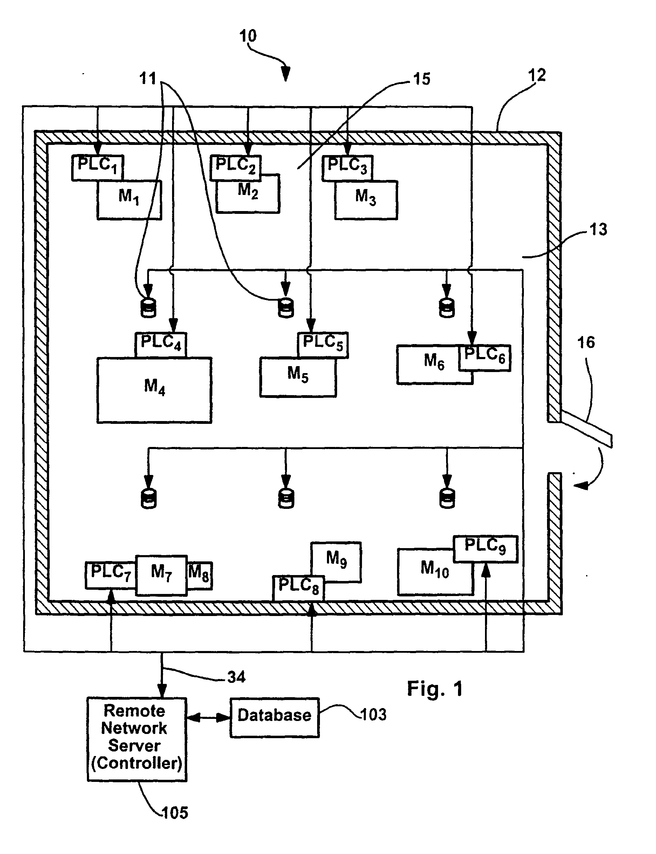

Referring now to the drawings wherein like reference numerals correspond to similar elements throughout the several views and, more specifically, referring to Fig. 1, the present invention will be described in a context of exemplary, albeit simplified, schematic plan view of a facility 10. Facility 10 includes rectilinear floor space or area 13 confined by four facility walls collectively identified by numeral 12. In the exemplary facility 10, entire area 13 comprises a single room (i.e., there are no wall partitions within facility 10 and the entire facility resides on a single level). A doorway 16 is provided to allow access to area 13.

Exemplary facility 10 includes ten separate machine lines labeled M₁ through M₁₀. Lines M₁ through M₁₀ are shown as being different sizes to visually illustrate that the lines may have different physical footprints. For the purposes of this invention, the nature of each of lines M₁ through M₁₀ is similar and therefore, unless indicated otherwise, the present invention will be described in the context of line M₁ to simplify this explanation.

Referring still to Fig. 1, it is contemplated that each of lines M₁ through M₁₀ will include a plurality of machine line stations and that each station will in turn include a plurality of sensing devices that sense machine operating characteristics and product assembly characteristics (e.g., location) and that provide signals that can be used to facilitate machine monitoring and to sequence both intra-station operations and inter-station operations (i.e., operations between various of the stations within a machine line). For instance, in the case of a drilling assembly, sensors may include limit switches that are tripped when a drill slide reaches various positions along a travel path, on/off switches, speed sensing switches, motor operating characteristic sensors, proximity switches, etc.

It is also contemplated that most, if not all, of lines the line stations will include a plurality of actuators for causing station components to perform station functions. For instance, a first actuator at a mill station may be for controlling rotation of a mill head, a second actuator may be for controlling a slide arm of the mill head, a third actuator may be for controlling movement of a clamping device for clamping a product in a specific location prior to beginning a milling process, and so on.

Each of the sensors and actuators associated with machine lines M₁ through M₁₀ is linked to a programmable logic control (PLC) via a communication data bus 34 so that the PLCs can receive signals from the sensors and can provide control signals to the actuators. To this end, nine separate PLCs, PLC₁ through PLC₉ are provided for controlling machine lines M₁ through M₁₀. As illustrated, in most cases, a single PLC is provided for controlling a single one of the machine lines (e.g., PLC₁ controls proximate line M₁, PLC₂ controls proximate line M₂, etc.). However, as illustrated, in at least one instance, a single controller PLC₇ is provided to control two machine lines M₇ and M₈. Here it should also be recognized that, in at least some embodiments, although not illustrated, more than one PLC may be required or provided to control a single one of the machine lines. Each of the programmable logic controllers PLC₁ through PLC₉ is linked via network 34 to a remote network server 105.

In addition to the components described above, facility 10 also includes a plurality of communication sensors or access points 11 (only two numbered). Wireless transceivers like access points 11 are well known in the industry and therefore, in the interest of simplifying this explanation, will not be described here in detail. For the purposes of the present invention, it should suffice to say that each access point 11 includes a two-way wireless transceiver that is capable of transmitting and receiving electro-magnetic (e.g., radio or infrared) signals within an area proximate the transceiver. Each transceiver 11 transmits information signals which decrease in a strength as distance from the transceiver increases. In the illustrated example, six separate access points 11 are provided within area 13 and are generally equi-spaced within area 13.

Typically, access points 11 will be mounted to the ceiling within an area 13 to allow relatively unobstructed communication between an access point 11 and other devices that communicate therewith within area 13. While access points 11 are illustrated as being substantially equi-spaced within area 13, it should be appreciated that other access point arrangements are contemplated and that, in many cases, other access point arrangements may be most suitable given specific machine line layouts, the physical characteristics of each of the machine lines and the layout of the machine lines within space 13.

Server 105 is linked to each of access points 11 via network 34 and can receive information from the access points 11 and provide information to each of the access points 11 for transmission within area 13. Information transmitted from each access point 11 to server 105 is typically labeled by the access point so that server 105 can determine which access point 11 provided the received information. In a similar fashion, server 105 and access points 11 are configured such that server 105 can address information to each separate and specific access point 11 via an access point network address.

Server 105 is also linked to a database 103 that stores various programs that are performed by server 105. More specifically, in at least some applications, server 105 will cooperate with the distributed controllers PLC₁ through PLC₉ to sequence manufacturing process steps and sub-processes performed by lines M1 through M₁₀. In addition, in at least some inventive embodiments, server 105 may perform a process for identifying the locations of specific product assemblies (e.g., seat assemblies in the present example), components and materials as the product assemblies, components and materials are moved within space 13, may sequence machine line process steps as a function of the locations of the product assemblies, components and materials and may issue warnings when unintended process steps (e.g., unintended assembly of components is identified) are identified.

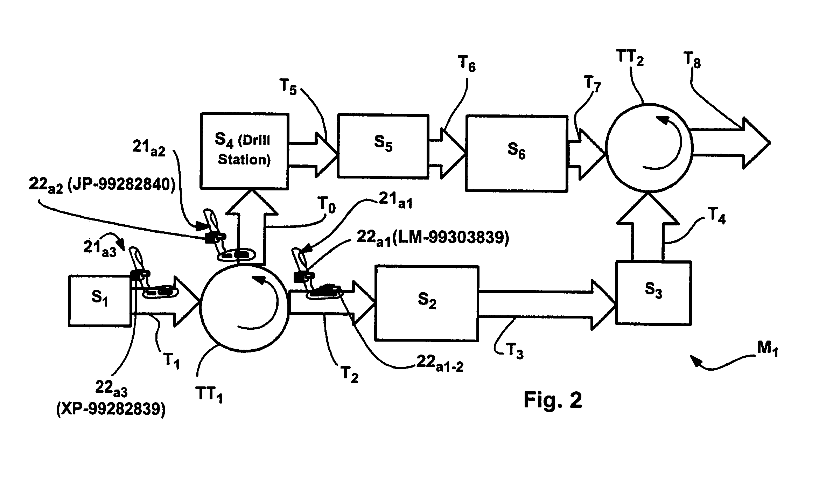

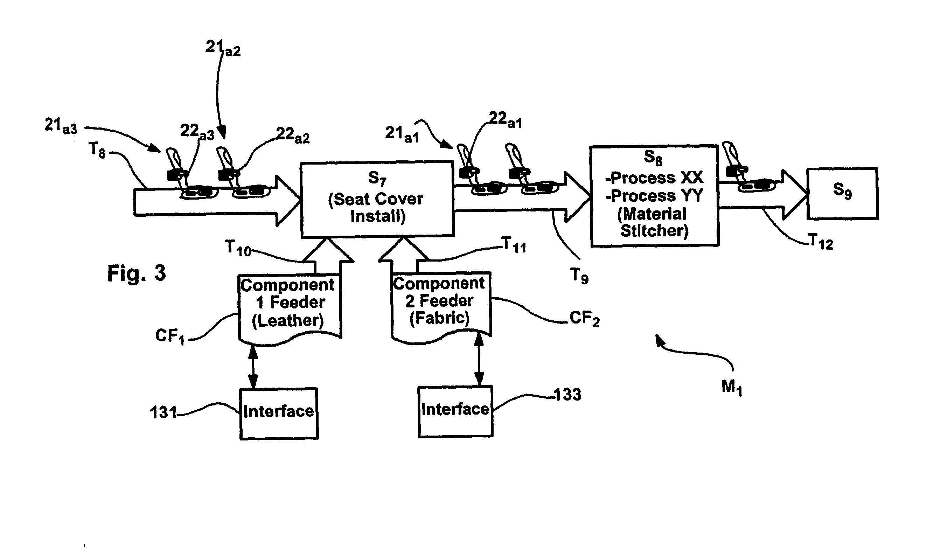

Referring now to Figs. 2 and 3, an exemplary first machine line M₁ is illustrated wherein seat assemblies (e.g., 21ₐ₁, 21ₐ₂, 21ₐ₃, etc.) are provided to line M₁ at a loading station S₁, passed through line M₁ and are provided at an unloading station S₉ after various manufacturing process steps are performed. Exemplary line M₁ includes a plurality of stations S₁ through S₉, transfer line sections T₁ through T₁₂, two rotary turn tables TT₁ and TT₂ and first and second component feeders CF₁ and CF₂. Although not shown, each of the stations, transfer line sections, feeders and turn tables in Figs. 2 and 3 are linked to PLC, or to the network server 105 or both via the network 34 (see again Fig. 1). Hereinafter, although each of the resources in Figs. 2 and 3 may be linked to a PLC or server 105, the resources will be described as linked to server 105 to simplify this explanation. Transfer line sections T₁ through T₁₂ and rotary tables TT₁ and TT₂ define two separate and distinct paths for seat assemblies fed to line M₁ at station S₁. To this end, a first path defined by transfer line sections T₁ through T₄, T₈, T₉ and T₁₂ passes seat frames along a path including stations S₁, S₂, S₃, S₇, S₈ and S₉. The second path passes frames along a path including stations S₁, S₄, S₅, S₆, S₇ S₈ and S₉. Here, it is assumed that the first path from station S₁ to S₂ and so on is a path that, at least in part, configures a standard or low end seat configuration that does not include motors or special padding or cushions but does include cables for seat adjustment. In addition, it is assumed that the path from station S₁ to station S₄ and so on corresponds to at least some process steps that have to be performed to configure a high end seat configuration including motors and special high end cushions. More specifically, here, it will be assumed that station S₄ is a drilling station wherein one or more drill heads are used to provide a plurality of holes in each seat assembly frame received at station S₅ where the holes are used to mount one or more seat motors at station S₅ and that station S₆ is a cushion installation station where various seat cushions are installed by station machines. In addition, it will be assumed station S₂ is a cable installation station where cables are mounted to seat frames to facilitate seat adjustment while station S₃ is a standard seat cushion installation station where standard type seat cushions are installed by station machines.

Referring still to Figs. 2 and 3, seat assemblies 21ₐ₁, 21ₐ₂, etc., loaded at station S₁ are transferred by transfer line segment T₁ to rotary table TT₁. Frames that are to be constructed into standard seat configurations are directed by table TT₁ along transfer line section T₂ to station S₂ and thereafter by transfer line section T₃ to station S₃ and by line section T₄ to second rotary table TT₂. Similarly, seat assemblies loaded at station S₁ that are to be configured as high end seat configurations are transferred by rotary table TT₁ to transfer line section T₀ and thereby on to station S₄. From station S₄, assemblies are passed on by line section T₅ to station S₅, by line section T₆ to station S₆ and by line section T₇ to second rotary table TT₂. Second rotary table TT₂ transfers all received seat frames via line section T₈ to station S₇.

Referring still to Fig. 3, station S₇ is a seat cover installing station where seat covers are fitted onto each seat assembly. To this end, it is contemplated that, in at least the present example, leather seat covers will always be applied to high end seat configurations while a textile fabric cover will be applied to low end/standard seat configurations. In addition, it is contemplated that, when leather is applied to a seat configuration, a high end stitching process or pattern YY is used to apply the leather to the seat configuration. Similarly, when a textile fabric is applied to a standard seat configuration, a second stitching process XX is used to apply the fabric to the seat configuration. The material stitching process is performed by machines located at station S₈.

Referring yet again to Fig. 3, a leather component feeder CF₁ is loaded by a facility operator with leather seat covers suitable for use by material applying station S₇. Here, where multiple leather colors are available, the facility operator may be provided with specific instructions regarding the sequence of leather cover colors to be loaded into feeder CF₁ via an interface 131 linked (link not shown) to remote server 105 (see again Fig. 1). Thus, for instance, one seat assembly 21ₐ₂ may require a black leather cover while a following assembly 21ₐ₃ requires a tan cover. In this case, interface 131 may indicate to the operator a loading sequence such that a black cover is sequenced for application on assembly 21ₐ₂ and a tan cover is sequenced for application on assembly 21ₐ₃. When a cover is loaded via feeder CF₁, the cover is provided via transfer line section T₁₀ to station S₇. Similarly, a facility operator loads textile fabric covers suitable for application by station S₇ into feeder CF₂, the covers fed to station S₇ via transfer line section T₁₁. Once again, server 105 may indicate a specific sequence of textile fabric cover colors to be loaded into feeder CF₂ via a feeder interface 133 associated with second feeder CF₂.

Station S₇ is controlled to apply specific covers on specific seat assembly instances as the seat assemblies are presented at station S₇. To this end, when a seat assembly that is to be configured as a high end seat including motors and special cushions is presented at station S₇, station S₇ applies a leather cover received along transfer line section T₁₀. Similarly, when a seat assembly to be configured as a standard seat is received at station S₇, station S₇ applies a textile fabric cover received along line section T₁₁.

Referring once again to Fig. 3, transfer line section T₉ passes seat frames/assemblies from station S₇ to station S₈. Station S₈ is programmed or controlled to perform either high end or low end stitching processes YY or XX, respectively, depending upon the type of seat assembly being configured. Thus, for instance, when a high end seat assembly is received at station S₈, process YY is performed and, when a standard type seat assembly is received at S₈, stitching process XX is performed.

Referring still to Figs. 2 and 3, it has been recognized that many of the proximity and location sensors that would typically be used to determine the location and identity of specific seat assemblies in a machine line like exemplary line M₁ can be eliminated where the locations of product assemblies along line M₁ can be determined in some other fashion. Thus, for instance, instead of providing large numbers of position/proximity sensors along line M₁ to identify seat assembly locations and identities, where devices can be placed on each assembly instance that facilitate location determination, overall system costs can be reduced appreciably. For example, instead of providing separate proximity sensors at each of tables TT₁ and TT₂ for identifying specific seat assembly instances and controlling tables TT₁ and TT₂ as a function thereof, a device can be provided on assembly 21ₐ₁ and the location of the device can be determined routinely. Here, when the device mounted on or associated with assembly 21ₐ₁ is located at table TT₁, table TT₁ can be controlled as a function of both the location and identity of assembly 21ₐ₁. Similarly, when the device mounted on assembly 21ₐ₁ is located at table TT₂, table TT₂ can be controlled as a function of the device location.

According to at least some aspects of the present invention, a wireless information device that can communicate with access points 11 (see again Fig. 1) is provided on each product assembly 21ₐ₁, 21ₐ₂, etc., and information exchanged between the access points 11 and the information devices is used to identify the locations of the devices. For example, referring still to Fig. 2, an exemplary wireless information device assembly 21ₐ₁ is illustrated. When assembly 21ₐ₁ and device 22ₐ₁ arrive at table TT₁, in at least some embodiments of the present invention, server 105 is programmed to determine the location of device 22ₐ₁ and control table TT₁ as a function thereof. Similarly, when a second product assembly 21ₐ₂ and an associated device 22ₐ₂ arrives at table TT₁, server 105 is programmed to control table TT₁ as a function of the identity and location of assembly 21ₐ₂.

In a similar fashion, referring to Fig. 3, when assembly 21ₐ₂ and associated device 22ₐ₂ arrives at material applying station S₇, server 105 controls station S₇ as a function of the specific instance of the assembly that arrives so that an appropriate leather or textile cover is applied to the seat assembly 21ₐ₂. Moreover, in the present example, server 105 controls machines at station S₈ to facilitate appropriate stitching processes and patterns as a function of information device location and the identity of an associated product assembly. Hereinafter, unless indicated otherwise information devices 22ₐ₁, 22ₐ₂, etc. will be referred to generally as "tags" in order to simplify this explanation and, unique tag identification numbers or product identifiers will be referred to as "tags IDs". Referring once again to Fig. 2, exemplary product assembly/information tag IDs LM-99303839, JP-99282840 and XP-99282839 are identified that correspond to information tags 22ₐ₁, 22ₐ₂ and 22ₐ₃, respectively.

Referring still to Fig. 2, in at least some cases where a product assembly may be in more than one juxtaposition on a transfer line section, more than one tag may be placed on each assembly to ensure that the location of at least one of the tags is precisely determinable despite the seat juxtaposition. Thus, for instance, in Fig. 2, first and second tags 22ₐ₁ and 22ₐ₁₋₂ are provided on assembly 21ₐ₁.

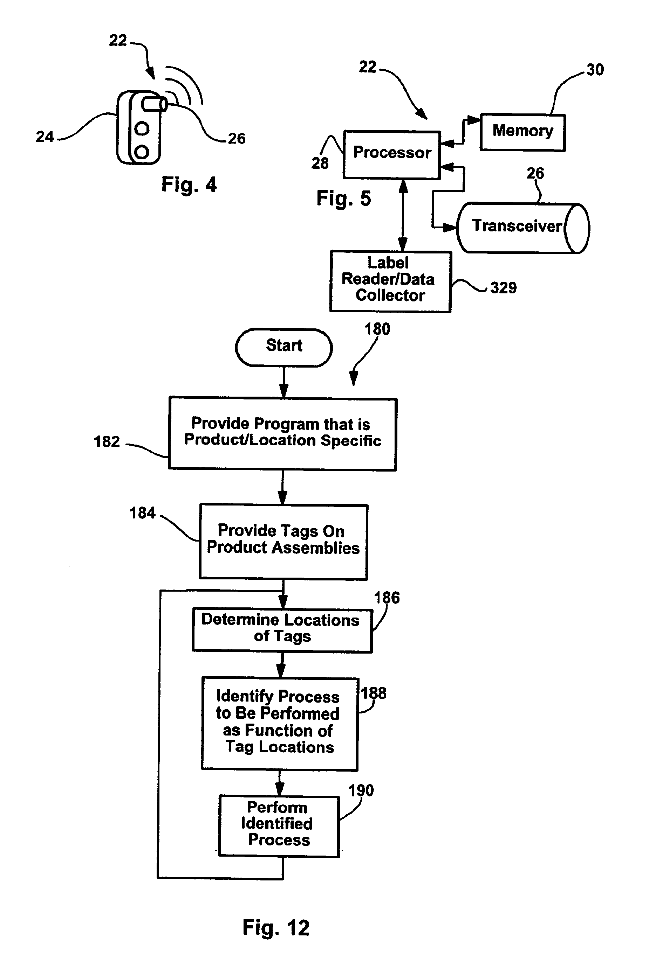

Referring now to Figs. 4 and 5, an exemplary wireless tag 22 that is consistent with certain aspects of the present invention is illustrated. Tag 22 includes a plurality of components mounted in a hardened plastic or metallic housing 24. The components include, among other components, a processor 28, a memory 30 and a transceiver 26. Processor 28 is linked to each of memory 30 and transceiver 26 for communication therewith. Processor 28, in at least some embodiments, is programmed to receive signals from access points 11 via transceiver 26, use those signals to perform a statistical analysis, a time of flight analysis, a signal strength analysis or some other suitable location determining algorithm, and to determine the location of tag 22 within area 13 and then to transmit the identified location along with tag ID back to access points 11 which in turn transmit the received information to remote network server 105. In other embodiments, processor 28 may simply transmit a unique tag ID to network server 105 via transceiver 26 and access points 11 after which server 105 may determine the location of the transmitting tag 22 as a function of signal strengths, time of flight, etc. In any event, the tag identifying unique identification number and any programs performed by processor 28 are stored in memory 30.

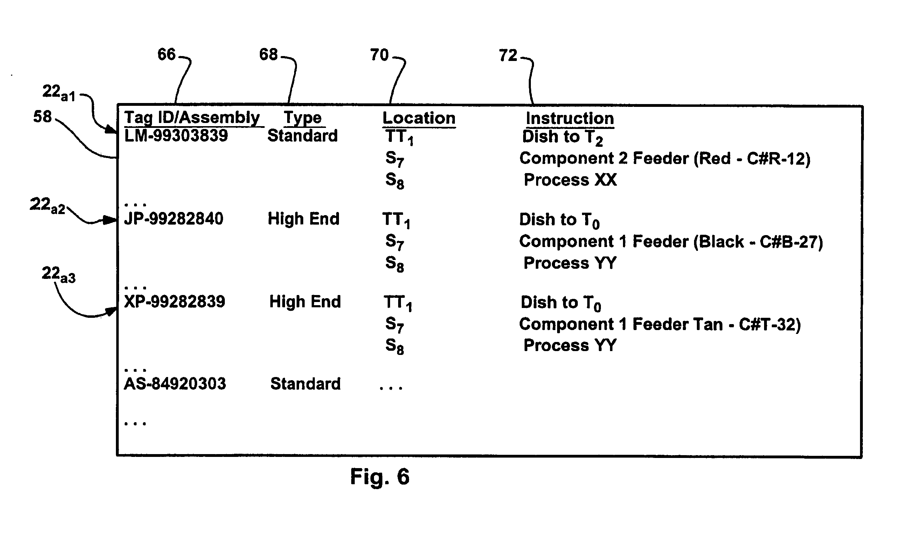

Referring now to Fig. 6, an exemplary table 58 that may be stored in database 103 (see also Fig. 1) for access by server 105 to control assembly specific processes of line M₁ is illustrated. Table 58 has four columns including a tag ID/assembly column 66, a type column 68, a location column 70 and an instruction column 72. Tag ID/assembly column 66, as the label implies, includes a separate indicator corresponding to each one of the product assemblies to be loaded for processing by machine line M₁ at station S₁. Consistent with the above example, the tag IDs in column 66 correspond to tags 22ₐ₁ 22ₐ₂, and 22ₐ₃, etc., that are stored in tag memories 30 (see again Fig 5).

Type column 68 indicates whether or not a product assembly corresponds to a standard type seat configuration or a high end seat configuration. Thus, the assembly associated with tag 22ₐ₁ is a standard type seat assembly, the assembly associated with tag 22ₐ₂ is a high end assembly, the assembly associated with tag 22ₐ₃ is a high end assembly, and so on. Here, it should be recognized that column 68 is not required for server 105 to perform the exemplary processes described herein, instead, column 68 is simply provided in the interest of simplifying the present explanation by clearly enunciating the types of seat assemblies indicated in column 66.

Referring still to Fig. 6 and also to Fig. 1, column 70 indicates locations within area 13 and specifically associated with machine line M₁ at which the presence of specific seat assemblies will cause different machine control. In the interest of simplifying this explanation, the locations in column 70 are expressed in a manner consistent with nomenclature adopted in Figs. 2 and 3 (e.g., TT₁, S₇, S₈, etc.). Nevertheless, it should be appreciated that, in at least some applications, the locations may be specified in other ways (e.g., 2 or 3 dimensional coordinates within area 13, etc.).

In table 58, three separate locations TT₁, S₇ and S₈ are specified for the seat assembly to be associated with tag 22ₐ₁ meaning that assembly specific machine operations will occur when the assembly associated with tag 22ₐ₁ is located at each of those locations. Similarly, locations TT₁, S₇ and S₈ are specified for each of the seat assemblies to be associated with tags 22ₐ₂ and 22ₐ₃, and so on.

Instruction column 72 includes instructions for each of the locations specified in column 70. Thus, referring once again to Fig. 3, and also Fig. 6, for the assembly associated with tag 22ₐ₁, instruction column 72 includes three instructions, a separate instruction corresponding to each of locations TT₁, S₇ and S₈. More specifically, the instruction corresponding to location TT₁ indicates that when the assembly associated with tag 22ₐ₁ is at table TT₁, table TT₁ should dish or pass on the assembly to transfer line section T₂ and hence to station S₂. The instruction corresponding to the location of station S₇ requires that station S₇ apply a cover from component feeder CF₂ (i.e., the second feeder) as opposed to a leather cover from component feeder CF₁. In addition, the instruction for station S₇ also includes an indication "(Red-C#R-12)" which indicates the color of the textile material cover that should be applied to assembly 21ₐ₁ associated with tag 22ₐ₁. this color indication may be used by server 105 to, via an interface proximate feeder CF₂, indicate the appropriate time (e.g., sequence) at which to load a red cover to ensure application to seat assembly 21ₐ₁.

The instruction for the location of station S₈ is that stitching process XX, as opposed to process YY, is to be performed. Thus, when seat assembly 21ₐ₁ associated with tag 22ₐ₁ arrives at table TT₁, the assembly is transferred to line section T₂. When the assembly 21ₐ₁ arrives at station S₇, station S₇ applies a textile fabric cover and, when assembly 21ₐ₁ arrives at station S₈, station S8 performs the XX stitching process. Similarly, instruction column 72 requires that table TT₁ transfer assembly 21ₐ₂ associated with tag 22ₐ₂ to transfer line section T₀, that station S₇ apply a leather cover from feeder CF₁ as opposed to a textile fabric cover from feeder CF₂ when assembly 21ₐ₂ associated with tag 22ₐ₂ arrives at station S7 and that station S8 perform high-end stitching process YY when assembly 21ₐ₂ arrives at station S₈.

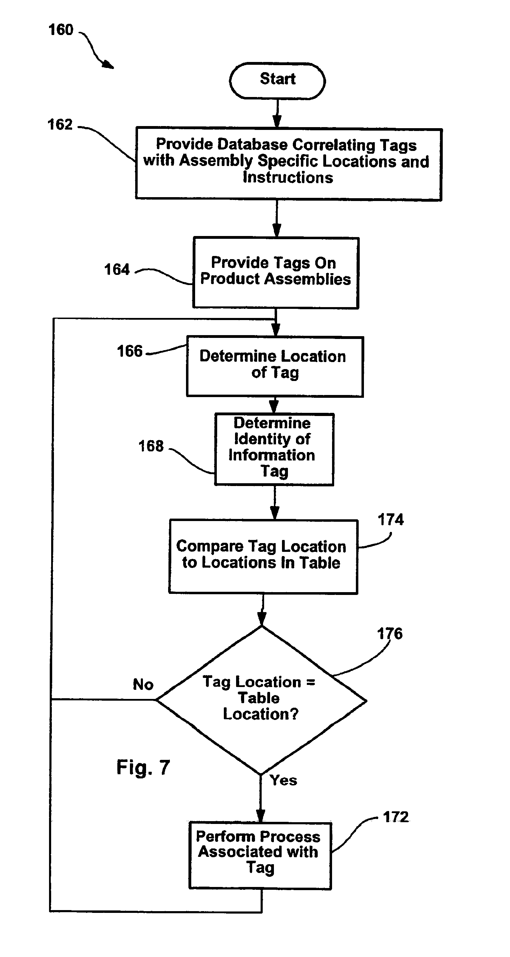

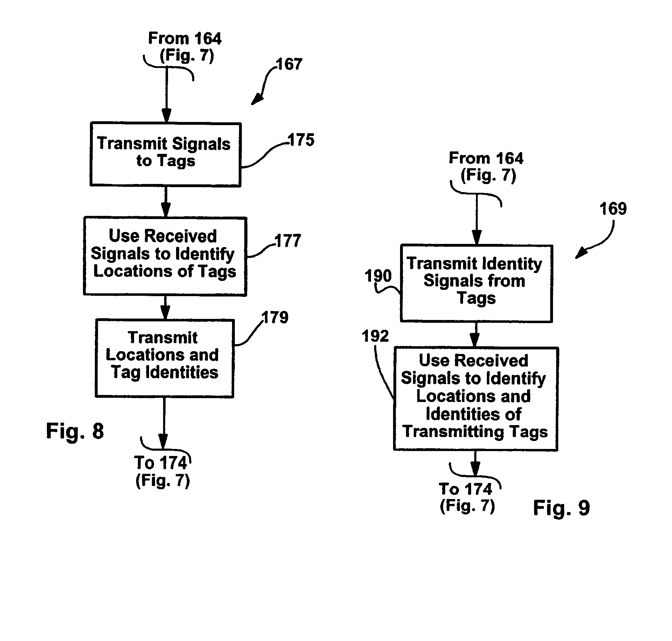

Referring now to Fig. 7, an exemplary method 160 consistent with the discussion above and that may be performed by server 105 is illustrated. Prior to process 160 it is assumed that specific seat orders (e.g., seat specifications indicating high end or standard seat and color of cover) have been specified. In addition, it is assumed machine line M₁ (see Figs. 2 and 3) has already been constructed and that control programs have been provided for server 105 and for PLC. More specifically, for the purposes of the present invention, programs have been provided that will control the machine line M₁ resources (e.g., machines) as a function of tag locations and assembly types in a manner consistent with table 58 in Fig. 6. For instance, for standard seat assemblies, the location and instruction information corresponding to tag 22ₐ₁ in Fig. 6 would be manifest in the programs and for high end seat assemblies, the location and instruction information corresponding to tag 22ₐ₂ would be manifest in the programs and control algorithms.

Referring to Figs. 1, 2, 4 and 7, at block 162, the seat orders are used to populate or instantiate a table like table 58 and to associate specific ID tags (e.g., 22ₐ₁, 22ₐ₂, etc.) with specific seat orders. To this end, although not illustrated, it is contemplated that an interface having access to the seat orders may be used by a facility employee to associate each tag with a specific seat order. For instance, the interface may be able to obtain the ID number from a proximate and currently unused tag when a seat order is received and associate the ID number with the order information. More specifically, in the present example, the interface may be programmed to determine if the order is for a standard seat assembly or for a high end seat assembly and the color of the seat cover specified by the order. Here, the tag ID (e.g., LM-99303839 - see again Fig. 6) is associated with information indicating assembly type (e.g., standard or high end) and cover color. In addition, the associating process causes columns 70 and 72 of table 58 to be populated with specifying information (e.g., locations and functions associated with a standard seat assembly as well as the cover color requirement).

Referring still to Fig. 7 and also to Fig. 2, at block 164, a facility employee provides the associated tags (e.g., 22ₐ₁, 22ₐ₂, etc.) on generic seat assemblies prior to loading the seat assemblies at station S₁. At block 166, as the seat assembles and associated tags move along the different transfer line sections for each tag, the location of the tag is determined in some fashion.

Continuing and referring also to Fig. 1, at block 168, for each tag, server 105 determines the identity of the tag by obtaining the tag/ID number from the tag, accesses table 58, identifies locations in column 70 that are associated with the tag identified at block 168 and then block 174 compares the current location of the tag to the locations in table 58. At block 176, where the current tag location matches one of the locations in column 70 of table 58 for a specific assembly, control passes to block 172 where the process in column 72 that is associated with the matching location from column 70 is performed. Thus, for instance, where tag 22ₐ₁ mounted to assembly 21ₐ₁ is located at table TT₁, the tag identity and location are determined at blocks 168 and 166, respectively, the location is recognized at block 176 as matching one of the locations in column 70 that is associated with tag 22ₐ₁ and therefore the instruction (i.e., dish to transfer line section T₂) is performed at block 172. After block 172, control passes back up to block 166 where the process described above is repeated.

Referring still to Fig. 7, at block 176, if the current tag location does not match one of the locations specified in table 58 for a specific tag, control passes from block 176 back up to block 166 where the loop described above is repeated.

Various methods and processes may be used to determine the locations of tags mounted to the seat assemblies. To this end, referring now to Fig. 8, one exemplary sub-process 167 that may be substituted for process blocks 166 and 168 in Fig. 7 is illustrated. Referring also to Fig. 7, after tags are provided on each of the seat assemblies at block 164, control passes to block 175 in Fig. 8 where, referring also to Fig. 1, signals are transmitted from access points 11 within space 13 and therefore to all active tag transceivers 26 (see again Figs. 4 and 5) within space 13. At block 177, each of the tag processors 28 receives the signals obtained by the linked transceiver 26 and uses the received signals to identify the location of the associated tag 22. At block 179, processor 28 transmits the location and tag ID via transceiver 26 and access points 11 to server 105. After block 179 control passes back to block 174 in Fig. 7 where the process described above continues.

Referring to Fig. 9, one other sub-process 169 that may be substituted for process blocks 166 and 168 in Fig. 7 is illustrated. Referring also to Fig. 7, after tags 22 are provided on each of the seat assemblies at block 164, control passes to block 190 in Fig. 9. At block 190, each of tags 22 transmits its tag ID to server 105 via transceiver 26 and access points 11. At block 192, server 105 uses the received signals to identify the location of the transmitting tag. After block 192, control passes back to block 174 in Fig. 7 where the process described above continues.

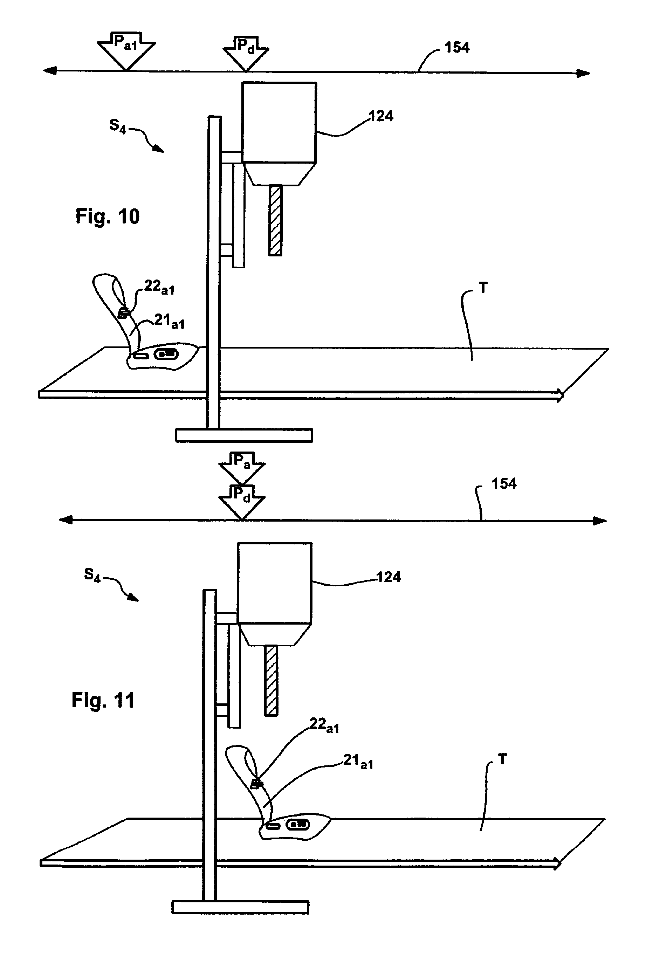

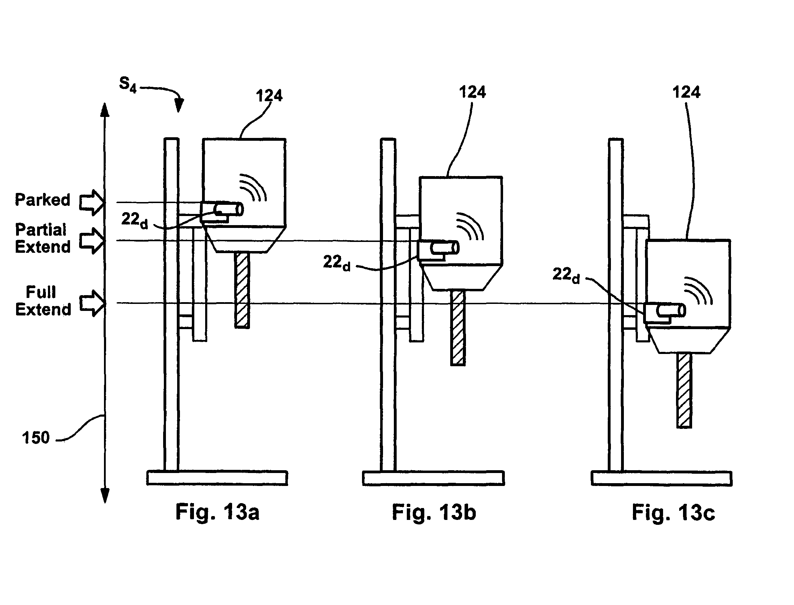

In at least some applications, it should be appreciated that the process performed on a seat assembly that arrive at a particular location along machine line M₁ may be identical for all seat assemblies. For example, referring to Figs. 10 and 11, an exemplary hole drilling station S₄ is illustrated. When seat assembly 21ₐ₁ is moved into a specific location (see Fig. 11) by a transfer line T with respect to a drill assembly 124, transfer line T may be programmed to halt movement and drill assembly 124 may be programmed to perform its hole forming processes on assembly 21ₐ₁. Thus, referring still to Figs. 10 and 11, server 105 may be programmed with the precise location P_{d} of the drill head along a transfer line axis 154. As transfer line T moves assembly 21ₐ₁ toward drill assembly 124, server 105 may be programmed to track the position Pₐ₁ of tag 22ₐ₁ along line axis 154 with respect to drill position P_{d}. Prior to assembly 21ₐ₁ arriving under drill assembly 124, transfer line T may be programmed to slow down so that precise positioning of assembly 21ₐ₁ can be controlled.

Referring to Fig. 11, once assembly position Pₐ is identical to drill position P_{d}, server 105 stops movement of assembly 21ₐ₁ and begins the hole forming process by controlling drill assembly 124. Thus, this exemplary embodiment controls machine line machines as a function of the locations of tags attached to seat assemblies irrespective of the identity of specific seat assemblies. Here, it should be appreciated that the number of sensors required to configure line M₁ can be substantially reduced by taking advantage of existing wireless infrastructure such as access points to determine product locations and to sequence resource activity.

Referring now to Fig. 12, one method 180 consistent with the explanation of Figs. 10 and 11 above is provided. At block 182, a program is provided that is location specific and that is not seat assembly specific. In the above example, the program would specify that drill press 124 perform a hole forming process when one of the tags (e.g., 22ₐ₁) is precisely aligned with the drill position P_{d}. At block 184, tags are provided on all of the seat assemblies that are to be fed to a machine line. At block 186, server 105 determines the locations of all of the tags 22 that are making their way through the machine line. At block 188, server 105 identifies any processes to be performed on seat assemblies as a function of the locations of associated tags 22. At block 190, server 105 performs the identified processes and control then passes back up to block 186 where the loop above is repeated.

While the example above is described in the context of a single transfer line axis 154, it should be appreciated that the principles described are applicable in more complex two and three dimensional applications where tags are located in two or three dimensional space. Thus, for instance, in Fig. 11, the hole forming process may only be performed if device 22ₐ₁ is located precisely along axis 154 and also along a second horizontal axis (not illustrated) perpendicular thereto.

In at least some embodiments it is contemplated that, in addition to controlling machine line resources as a function of the locations of tags associated with separate seat assemblies, machine line resource control may also be tied to the locations of tags mounted to the machine line resources themselves thereby further reducing sensor count. For example, referring now to Fig. 13a, a tag 22_{d} may be mounted to the moving head component of a drill assembly 124 in a specific relative juxtaposition with respect to the drill bit there below (not labeled) at station S₄. Here, the location of information tag 22_{d} may be determinable in order to identify specific positions of assembly 124 along a drill stroke. For instance, as illustrated in Fig. 13a, when assembly 124 is in a parked position, device 22_{d} may be located in a first position. Referring to Fig. 13b, when assembly 124 is in a partial extend position (e.g., just prior to the bit entering a seat assembly frame there below), tag 22_{d} may be in a second known position and, when assembly 124 is in a full extend position, tag 22_{d} may be in yet another known position illustrated in Fig. 13c. Drill head movements may be controlled as a function of head positions. For example, when moving from the parked position in Fig. 13a to the partial extend position in 13b, assembly 124 may be moved at a high speed, when moved from the partial extend position in Fig. 13b to the full extend position of Fig. 13c, assembly 124 may be moved at a slow speed, when moved from the full extend position back to the partial extend position, assembly 124 may be moved at an intermediate speed and when moved from the partial extend position back to the parked position, assembly 124 may be moved again at the high speed.

Referring once again to Fig. 1 and also Figs. 13a through 13c, consistent with the description above, server 105 may be programmed to, prior to transferring a seat assembly to the station associated with drill assembly 124, determine that assembly 124 is in the parked position illustrated in Fig. 13a by determining the location of tag 22_{d}. After confirming assembly 124 is parked, server 105 transfers a seat assembly (not illustrated in Figs. 13a through 13c) to station S₄ and into a position below assembly 124 so that holes can be formed therein. As in the example described above with reference to Figs. 10 and 11, server 105 may be programmed to track assembly location via a tag on the assembly. Next, server 105 moves assembly 124 from the parked position in Fig. 13a to the partial extend position in Fig. 13b at the high speed. At the partial extend position, just prior to the drill bit entering the seat assembly frame, server 105 slows the movement of assembly 124 to the slow speed and continues the drill stroke from the partial extend position in Fig. 13b to the full extend position in Fig. 13c thereby forming a hole in the seat frame. Next, after server 105 determines that tag 22_{d} is in the full extend position illustrated in Fig. 13c, server 105 begins to back assembly 124 out of the seat frame at the intermediate speed until the partial extend position is again reached as in Fig. 13b. Once again, the partial extend position is identified by server 105 via the position of tag 22_{d}. Continuing, server 105 moves assembly 124 from the partial extend position in Fig. 13b to the parked position in Fig. 13a and confirms the parked position by determining the position/location of tag 22_{d}.

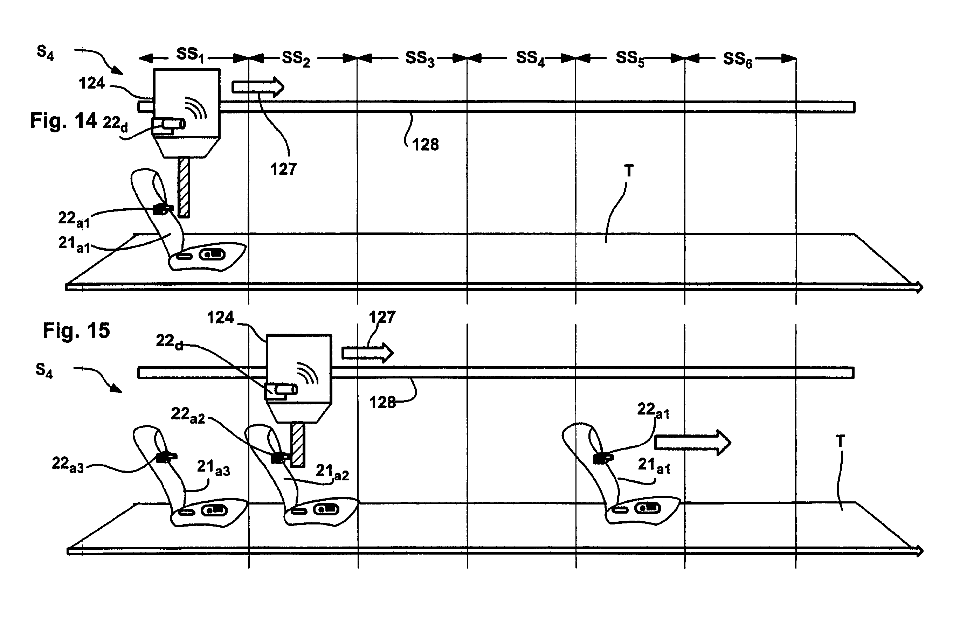

In addition to controlling machines along a machine line as a function of the locations of specific instances of seat assemblies, it has also been recognized that, in at least some applications, it may be advantageous to provide machine line components that automatically move to different locations within a space corresponding to an associated station to expedite product throughput. For instance, referring again to Fig. 2 and also to Fig. 14, exemplary drill station S₄ may include a drill assembly 124 having a downwardly extending bit (not labeled) that is mounted on a slide 128 for movement among any of six different substation spaces SS₁ through SS₆ to perform a hole forming processes (i.e., the entire hole forming process performed by drill assembly 124 may be performed at any one of the substations SS₁ through SS₆). Here, even where a preceding or a following station may have varying throughput times, station S₅ may be able to reduce the bottlenecking effects as space at station S₄ is used as a sort of dynamic storage space. To this end, referring to Fig. 14, when a first seat assembly 21ₐ₁ is provided at station S₄, drill assembly 124 may be moved over to substation SS₁ and aligned with assembly 21ₐ₁ to perform the hole forming processes. Here alignment may include aligning tags 22ₐ₁ and 21ₐ₁ in a specific and precise juxtaposition desired to ensure proper hole placement.

Referring also to Fig. 15, after appropriate holes have been formed in seat assembly 21ₐ₁, assuming station S₁ is providing seat assemblies at a rapid pace, transfer line T may move seat assembly 21ₐ₁ along to the next station S₅ and allow two additional seat assemblies 21ₐ₂ and 21ₐ₃ to be moved into substations SS₂ and SS₁, respectively. In this case, drill assembly 124 can be moved in the direction indicated by arrow 127 to substation SS₂, can be aligned with seat assembly 21ₐ₂ via tags 22ₐ₁ and 21ₐ₂ at substation SS₂ and can then perform its hole forming process on assembly 21ₐ₂ at station SS₂.

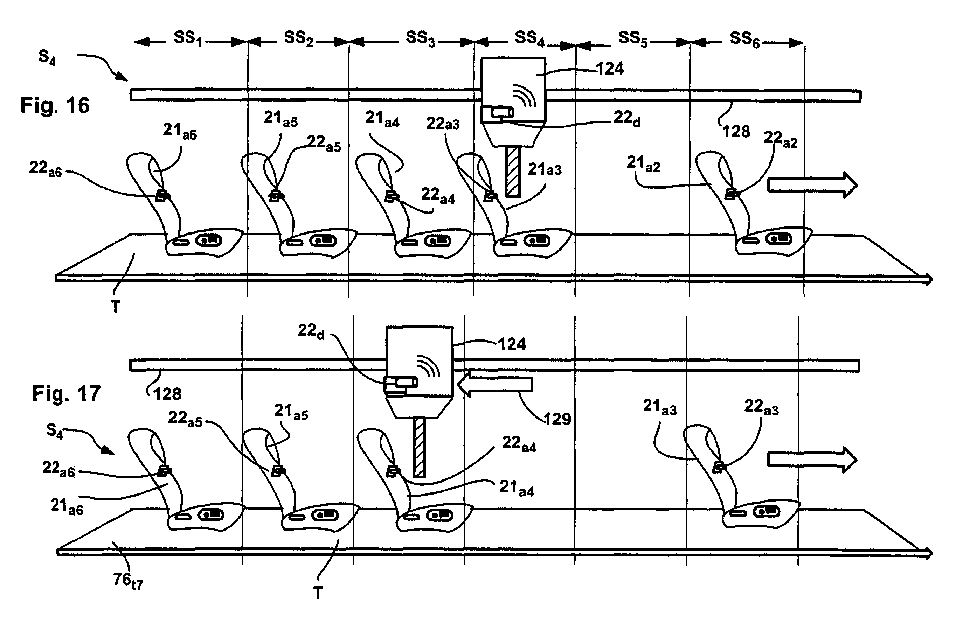

Continuing, referring to Fig. 16, after holes have been formed in seat assembly 21ₐ₂, transfer line T may be advanced such that seat assembly 21ₐ₃ is moved to the next sub-station SS₄ and three additional seat assemblies 21ₐ₄ - 21ₐ₆ may be moved into station S₄. In addition, here, drill assembly 124 is moved to station SS₄ so that holes can be formed in seat assembly 21ₐ₃. Once again, the leading assembly 21ₐ₂ in which holes have already been formed is transferred by line T to station S₅ to reduce bottlenecking and increased product throughput.

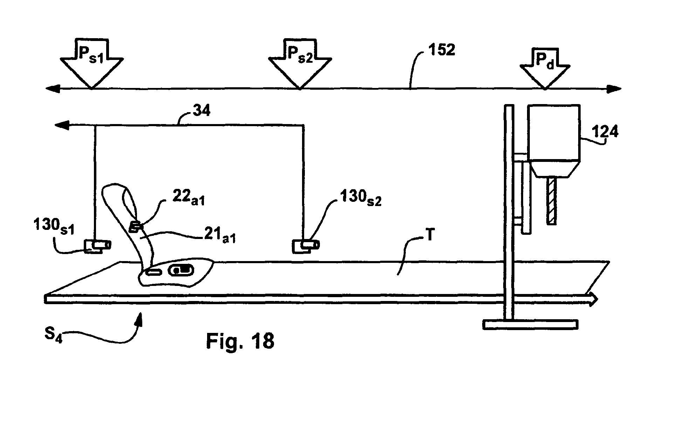

Referring now to Fig. 17, assuming station S₁ slows down its output for some reason (e.g., a facility employee slows down the loading process or a series of the seat assemblies are to be configured as standard assemblies), after holes are formed in seat assembly 21ₐ₃, while transfer line T passes assembly 21ₐ₃ on to station S₅, drill assembly 124 may be slid back along the direction indicated by arrow 129 to substation SS₃ where assembly 124 is controlled to form holes in seat assembly 21ₐ₄. Once again, after holes are formed in assembly 21ₐ₄, if station S₁ is still not ready to transfer another seat assembly to station S₄, drill assembly 124 may be moved to substation SS₂ to form holes in seat assembly 21ₐ₅ and so on.

In the above example corresponding to Figs. 14-17, it should be appreciated that both machine and seat assembly locations are determinable via tags 22ₐ₁, 22ₐ₂, etc. and therefore typical location sensors may be eliminated in at least some applications. It should also be appreciated that, in at least some applications, tags may be used in conjunction with other proximity or location sensors to facilitate machine control decision making processes. Moreover, while separate substations are described in the context of Figs. 14-17, in some cases drill assembly - seat assembly alignment may occur at any location within station S₄. In this case alignment via machine and assembly mounted tags is particularly advantageous. Furthermore, it is contemplated that alignment may be in two or three dimensional space as opposed to along a single axis. For instance, in Fig. 14, drill head 124 may be mounted to a dual axis slide rail assembly (not illustrated) to facilitate movement of head 124 along the direction identified by arrow 127 as well as along a second horizontal axis perpendicular thereto. In this case, even if seat assemblies were not centered on transfer line T, server 105 can be programmed to move drill head 124 to facilitate alignment.

While information device location may be determined wirelessly using access points in any of the manners described above, it should be appreciated that other processes for determining information device location are also contemplated herein that may, in at least some applications, be used to reduce sensor count. For example, referring to Fig. 18, stationary information device sensors 130ₛ₁ and 130ₛ₂ may be provided at different known positions Pₛ₁ and Pₛ₂ along a transfer line axis 152. Here, where a drill assembly 124 is at a known drill position P_{d} along axis 152, even where sensors 130ₛ₁ and 130ₛ₂ are at positions Pₛ₁ and Pₛ₂ that are separated from drill position P_{d}, the location of a tag 22ₐ₁ may be surmised from system operating characteristics and the most recent known position of tag 22ₐ₁. To this end, where transfer line T is transferring assembly 21ₐ₁ at a known velocity along axis 152, after sensor 130ₛ₁ senses tag 22ₐ₁ adjacent thereto, a timer may be started and, based on the velocity of transfer line T, the position of assembly 21ₐ₁ may be determined from the velocity and the timer count.

Once again, when tag 22ₐ₁ is proximate sensor 130ₛ₂, the assembly 21ₐ₁ position can be updated and, thereafter, the timer started again so that the transfer line velocity and timer count can be used to determine the position of assembly 21ₐ₁ between sensor 130ₛ₂ and drill assembly 124. Where sensor positions and velocity are precisely known, a server 105 should be able to stop assembly 21ₐ₁ precisely with respect to drill assembly 124.

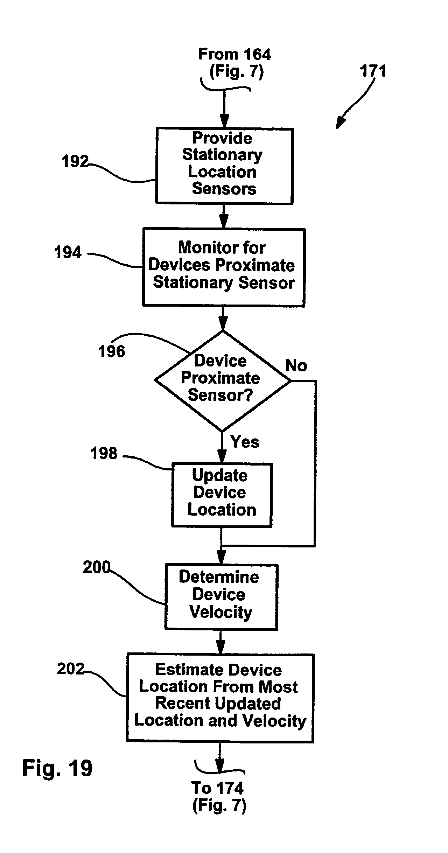

Referring now to Fig. 19, an exemplary sub-process 171 that may be substituted for process blocks 166 and 168 in Fig. 7 and that is consistent with the description above with respect to Fig. 18 is illustrated. To this end, after the tags 22 are provided on each of the seat assemblies provided to a machine line, control passes to block 192 in Fig. 19 where stationary location sensors (e.g., 130ₛ₁ and 130ₛ₂ in Fig. 18) are provided at known locations along the machine line. Sensors 130ₛ₁ and 130ₛ₂ are linked via network 34 to server 105.

Continuing, at block 194, server 105 monitors for tags proximate each of the stationary sensors. At block 196, where a tag is proximate one of the sensors, control passes to block 198 where device location is updated. After block 198, control passes to block 200. Referring again to block 196, where no tags are proximate sensors, control passes down to block 200. At block 200, server 105 determines the tag velocity by determining the velocity of transfer line T. Next, at block 202, server 105 estimates device location from the most recent updated location, the velocity of the transfer line T and the time since the most recent update. After block 202, control passes back to block 174 in Fig. 7 where the process described above continues.

In the preceding example it should be recognized that more complex algorithms for surmising locations of tags are contemplated. For instance, where the speed of the transfer line T is not continuous, in at least some examples, an algorithm that takes into account varying transfer rates and durations of transfer at each rate are contemplated.

Referring again to Fig. 18, in another embodiment, sensors 130ₛ₁, and 130ₛ₂ may be replaced with stationary position labels (e.g. bar codes, rf location tags, etc.) and the tags 22ₐ₁, 22ₐ₂, etc. may include label readers 329 (see again Fig. 5) (e.g., bar code readers, rf location tag readers etc.) at locations that enable label reading when an associated assembly passes one of the labels. In this case, tag processors 28 may be programmed to surmise tag location from most recently sensed location and transfer line velocity. Processors 28 may be programmed to transmit surmised location and tag ID either routinely (e.g., once every ½ second) or when the surmised location is relevant to resource control (e.g., in Fig. 2, when a tag is located at table TT₁).

According to one additional aspect of the present invention, it is contemplated that tags like tags 22ₐ₁, 22ₐ₂, 22_{d}, and so on, may be used by server 105 to reduce assembly errors by automatically checking whether or not particular components that are present at a station to be assembled should be assembled or should be identified as inconsistent with an assembly order. To this end, in at least some applications, it is contemplated that tags may be provided on each component to be added to an assembly that can be used to identify the location and identity of the components. In the above-referenced case, referring again to Fig. 3, each of the covers that is loaded into the feeders CF₁ and CF₂ may have its own tag attached thereto that can be used to identify the color of the specific cover. Referring also to Fig. 6, the color information in instruction column 72 may be used by server 105 to ensure that covers of the correct colors are being applied by station S₇ to the correct seat assemblies. Thus, when the assembly associated with tag 22ₐ₁ arrives at station S₇, server 105 may determine via the instruction in column 72 corresponding to station S₇ that a red cover is to be installed on the assembly. Here, server 105 next determines whether or not the next textile cover being provided by component feeder CF₂ and transfer line section T₁₁ is red by identifying the specific cover via the attached tag and then accessing information stored in database 103 indicating the cover color. Where the color of the next textile cover provided by line section T₁₁ is red, server 105 controls station S₇ to install the cover on the assembly. However, where the color of the cover is not red, server 105 performs some other function such as, for example, indicating to the line operator that an incorrect component (i.e., the seat cover) has been provided to station S₇. To indicate an incorrect cover sequence, interface 133 may be used as a visual/audio alarm interface to notify a facility employee.

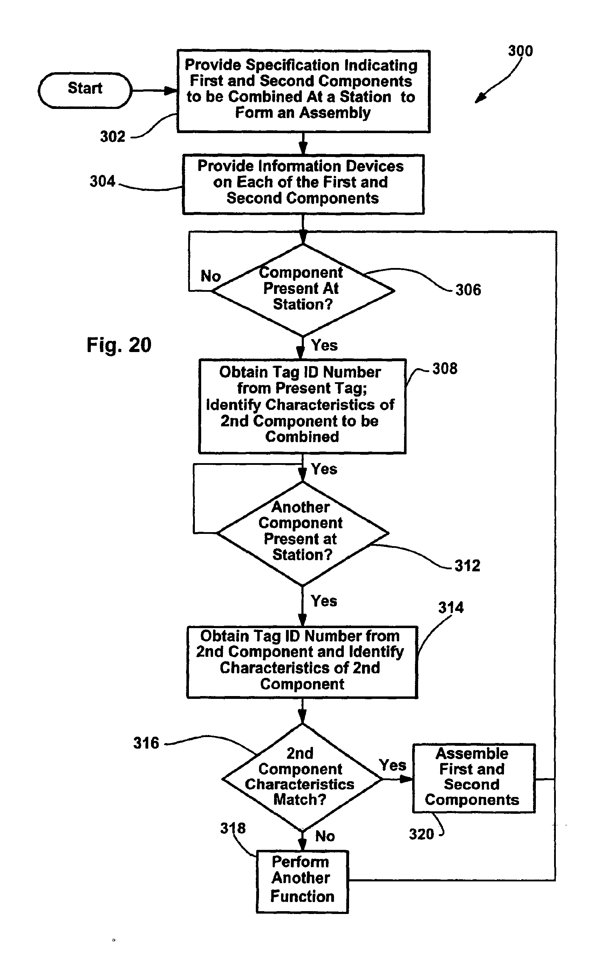

Consistent with the above comments, a method 300 for verifying components prior to assembly is illustrated in Fig. 20. At block 302, a specification indicating that specific first and second components are to be combined at a station to form an assembly is provided. In the above example the specification may indicate that the assembly 21ₐ₁ associated with tag 22ₐ₁ is to be covered by a seat cover having a tag (not illustrated) that corresponds to data in database 103 that indicates a red textile seat cover. At block 304, tags are provided on all of the components including the first and second components, that are to be assembled where the tags are associated in database 103 with information (e.g., red seat cover) about the associated components.

At decision block 306, server 105 monitors to determine when a component seat assembly is present at station S₇. Where no component is present at block 306, control loops back through block 306 until a component is present. Eventually, once a component is present, control passes to block 308 where server 105 obtains the tag ID from the seat assembly. In addition, at block 308, server 105 identifies the characteristics of the seat cover to be applied to the seat assembly including color by accessing database 103 and locating the color information associated with the tag ID.

Continuing, at block 312, server 105 monitors to determine when a seat cover is presented by transfer line section T₁₁. Eventually, once a seat cover is presented by section T₁₁, control passes to block 314 where server 105 obtains the tag ID number from the presented seat cover and correlates the ID number with cover characteristics in database 103. At block 316, server 105 compares the cover characteristics identified at block 308 (i.e., the characteristics of the cover to be applied to the seat assembly) with the cover characteristics identified at block 314 (i.e., the characteristics of the cover presented for application at station S₇). Where the cover characteristics match, control passes to block 320 where the cover is applied to the seat assembly. Where the cover characteristics do not match, control passes to block 318 where some other function (e.g., notice of an incorrect cover type) is performed. After each of blocks 318 and 320 control passes back up to block 306 where the process continues.

In some cases it is contemplated that feeders CF₁, CF₂, etc, may be able to re-shuffle components therein so that the line M₁ can locate specific components and automatically correct problems associated with wrong component sequences. Thus, in at least some cases, when an incorrect component is present to be combined with a product assembly, another function at block 318 may include locating a component of the type to be combined with the assembly, obtaining the located component and combining the component with the assembly. In the seat cover example above (i.e., at station S₇), feeder CF₁ would simply attempt to locate a leather cover of the correct color to be combined with an assembly and would then reshuffle the cover orders when a sequencing error is identified.

Referring again to Figs. 1 and 3, server 105 may be programmed to sense tags on seat covers being loaded into feeders CF, and CF₂, to compare the tag information to the sequences specified by interfaces 131 and 133 and to issue alarms and warnings immediately when an incorrect sequence occurs. In this case, when an incorrect sequence occurs, the facility employee loading the seat covers can immediately correct the error.

According to one additional inventive concept, it has been recognized that wireless location and position determining systems have been getting progressively more precise such that, in addition to determining general product position from tags or the like, orientation can also be at least generally and, in some cases, relatively precisely determined by placing two, three or more tags at different positions on a component or product assembly. For instance, in the seat example discussed throughout this document, a seat assembly may be positioned such that a back rest portion of the assembly faces in the direction of transfer line travel or in the direction opposite line travel. In this case, where a series of eight holes have to be provided along a front edge of a seat member and two holes have to be provided along the rear edge of the seat member, the relative juxtapositions of two or three tags can be used to determine seat orientation and modify drill head operations/movements accordingly. Assembly 21ₐ₁ in Fig. 2 includes two tags 22ₐ₁ and 22ₐ₁₋₂ that may be used to determine seat orientation.

While the invention may be susceptible to various modifications and alternative forms, specific embodiments have been shown by way of example in the drawings and have been described in detail herein. However, it should be understood that the invention is not intended to be limited to the particular forms disclosed. For example, while the tags described above each include a processor, a memory and a transceiver, it is contemplated that, in at least some applications, other types of tags may be employed to facilitate some of the inventive concepts. For instance, in the case of the method described in the context of Fig. 20, instead of using processor based tags that communicate with access points, rf ID tags or even bar coded tags may be employed with suitable tag readers at station S₇ to identify tag presence and identity.

As another example, while the examples above assume tags are mounted to seat assemblies, components and/or moveable machine components, it is contemplated that tags may simply be proximate components and/or resources. For example, in some cases a tag may be provided on a pallet on which a specific seat assembly resides or tag may be located on a stationary portion of a sliding drill head.

In cases where tags are relatively inexpensive, the tags will likely remain attached to components assuming they are not aesthetically objectionable. Nevertheless, in some cases the tags may be re-useable by being removed and then re-associated with new seat orders or other product orders or components.

Moreover, while the tags are described above as storing tag IDs that are correlated with location and tag specific instructions or characteristics in a database 103 after the ID numbers are obtained, in some cases, all of the information regarding instructions and characteristics may be stored in the tags themselves for use at specific facility locations. Here, for instance, referring again to Fig. 2, when tag 22ₐ₁ arrives at table TT₁, tag 22ₐ₁ may determine its location and transmit a signal to access points 11 (see again Fig. 1) causing sever 105 to control table TT₁ to dish tag 22ₐ₁ and associated assembly 21ₐ₁ off to station S₂. Similarly when tag 22ₐ₁ and assembly 21ₐ₁ reach station S₇, tag 22ₐ₁ may issue a signal causing server 105 to control station S₇ machines to apply a black leather cover consistent with the information in table 58. Thus, at least a sub-set of the information in table 58 may be stored in each of the tags indicating tab/assembly specific processes.

Furthermore, product location within a wireless environment may be determinable via two sensors on a product receiving signals from one or more access points.

In addition, in at least some cases, two or more identical machine stations may be arranged in series and, depending upon work flow travel, work product may be transferred to any one of the series stations. For instance, three series drill press stations may perform the same functions.

In summary the invention discloses a method and apparatus for controlling resources integrated to perform a process on a work product within an environment where at least one of a first of the resources and the work product is a moveable item that moves during the process, the method comprising the steps of providing an information device on the moveable item, ascertaining the location of the information device and controlling at least a first of the resources as a function of the location of the information device.

Thus, the invention is to cover all modifications, equivalents, and alternatives falling within the spirit and scope of the invention as defined by the following appended claims.

To apprise the public of the scope of this invention, the following claims are made:

## Claims

1. A method for controlling resources integrated to perform a process on a work product within an environment where at least one of a first of the resources and the work product is a moveable item that moves during the process, the method comprising the steps of:
providing an information device on the moveable item;
ascertaining the location of the information device; and
controlling at least a first of the resources as a function of the location of the information device.

2. The method of claim 1 wherein the moveable item is the product.

3. The method of claim 2 wherein the step of providing an information device includes providing a sensor on the product, the step of ascertaining the location of the information device including obtaining information from the environment via the sensor.

4. The method of claim 3 wherein the step of providing an information device includes providing a processor linked to the sensor, the step of ascertaining the location of the information device further including the step of using the processor to determine the location based on the obtained information.

5. The method of claim 4 further including the steps of providing at least one stationary transmitter within the environment and transmitting signals from the transmitter within the environment, the step of obtaining information including obtaining at least a sub-set of the signals transmitted by the transmitter.

6. The method of claim 5 wherein the step of using the processor to ascertain the location includes performing at least one of a triangulation method, a signal strength method and a statistical analysis method.

7. The method of claim 4 for use with a controller that controls the resources, wherein the step of providing an information device further includes providing a transmitter linked to the processor, the step of determining location further including the step of wirelessly transmitting the device location from the transmitter to the controller.

8. The method of claim 7 wherein the resources include at least a first resource having a location known to the controller and controlled by the controller to perform a process on the work product when the information device is in a first juxtaposition with respect to the first resource, the step of controlling including the step of initiating the first resource process when the information device is in the first juxtaposition.

9. The method of claim 8 further including the step of determining the location of the first resource.

10. The method of claim 3 further including the step of providing a set of stationary positioning labels at various locations within the environment, each label indicating the position thereof, the step of obtaining information including the step of, when the product is proximate one of the labels, obtaining the location information from the proximate label.

11. The method of claim 10 wherein the step of ascertaining further includes, when the product is between two of the stationary labels, estimating the location of the product from the location of at least the label that the product was most recently proximate.

12. The method of claim 11 wherein the step of estimating also includes estimating as a function of the time since the product was most recently proximate one of the labels.

13. The method of claim 12 wherein the step of estimating also includes estimating as a function of the velocity at which the product is moving within the environment.

14. The method of claim 2 wherein the resources include at least a first resource having a location known to the controller and controlled by the controller to perform a process on the work product when the information device is in a first juxtaposition with respect to the first resource, the step of controlling including the step of initiating the first resource process when the information device is in the first juxtaposition.

15. The method of claim 14 further including the step of determining the location of the first resource.

16. The method of claim 2 for controlling resources integrated to perform the process on multiple similar work products within the environment, the step of providing an information device on the work product including providing an information device on each of the work products and at the same locations on each of the work products.

17. The method of claim 2 further including the step of ascertaining the orientation of the work product and wherein the step of controlling includes controlling the resources as a function of both the location of the information device and the orientation of the work product.

18. The method of claim 17 wherein the information device is a first information device and wherein the step of ascertaining the orientation includes the step of providing at least a second information device on the work product and ascertaining at least one of the location of the second device and the relative juxtaposition of the second device to the first device.

19. The method of claim 18 wherein the step of determining the orientation includes providing at least a third information device on the work product and ascertaining at least one of the location of the third device and the relative juxtaposition of the third device to at least one of the first and second devices.

20. The method of claim 2 wherein the step of providing an information device includes providing at least first and second information devices on the work product and wherein the step of ascertaining the location includes ascertaining the location of at least one of the first and second information devices.

21. The method of claim 2 wherein the step of providing an information device includes providing a transmitter, the step of ascertaining the location including providing at least one sensor in the environment for receiving signals transmitted by the transmitter, receiving transmitted signals and using the transmitted signals to ascertain the location.

22. The method of claim 21 wherein the step of ascertaining includes performing at least one of a triangulation process, a signal strength process and a statistical analysis process on the received transmitted signals.

23. The method of claim 21 wherein the information device transmits a signal identifying the work product.

24. The method of claim 21 wherein the resources include at least a first resource having a location known and controlled by the controller to perform a process on the work product when the information device is in a first juxtaposition with respect to the first resource, the step of controlling including the step of initiating the first resource process when the information device is in the first juxtaposition.

25. The method of claim 24 further including the step of determining the location of the first resource.

26. The method of claim 2 further including the step of storing process data on the information device from which a process to be performed by at least the first resource can be identified.

27. The method of claim 26 further including the step of identifying the process data and using the process data to identify the process to be performed, the step of controlling as a function of location including controlling as a function of both location and the identified process.

28. The method of claim 26 further including the step of storing correlated product identifiers and processes to be performed on the products in a database, the step of storing process data including the step of storing a product identifier, the step of identifying the process data and using the process data including identifying the product identifier, accessing the database and identifying the correlated process as the process to be performed.

29. The method of claim 27 wherein the identified process specifies at least one component to be added to the product by the first resource, the method further including the steps of, confirming that a component to be added to the product is at least one instance of the specified component and then performing the identified process.

30. The method of claim 29 further including the steps of providing an information device on the component to be added to the product and storing a component identifier in the information device on the component, the step of confirming including obtaining the component identifier from the information device on the component and comparing the component identifier to the specified component and, when the component identifier matches the specified component, performing the identified process.

31. The method of claim 30 further including the step of identifying the location of component to be added to the product.

32. The method of claim 3 further including the step of providing a set of stationary information device sensors at various locations within the environment, each sensor capable of sensing the presence of the information device, the step of obtaining information including the step of, when the product is proximate one of the sensors, sensing the presence of the information device.

33. The method of claim 32 wherein the step of ascertaining further includes, when the product is between two of the stationary sensors, estimating the location of the product from the location of at least the sensor that the product was most recently proximate.

34. The method of claim 32 wherein the step of estimating also includes estimating as a function of the velocity at which the product is moving within the environment and the time since the product was proximate the sensor.

35. The method of claim 2 further including the steps of providing information devices on other work products within the environment and ascertaining the locations of the other work products within the environment, the step of controlling the first resource further including the step of controlling the first resource as a function of the locations of at least a sub-set of the work products.

36. The method of claim 1 wherein the information device is reusable.

37. The method of claim 1 wherein the resources include machines for performing an automated industrial process.

38. The method of claim 13 wherein the step of estimating also includes estimating as a function of the acceleration of the product within the environment.

39. The method of claim 20 wherein the step of ascertaining includes performing at least one of a triangulation process, a signal strength process and a statistical analysis process on the received transmitted signal.

40. The method of claim 33 wherein the step of estimating also includes estimating as a function of the acceleration of the product within the environment.

41. The method of claim 1 wherein the information device is non-reusable.

42. A method for verifying that a component is a first component prior to integrating the component with a product assembly, the method comprising the steps of:
providing a separate information device on each of at least a subset of components and on the product assembly where each of the information devices indicates the identity of the component/assembly on which the device is located; specifying that the first component is to be integrated with the assembly at a first station;
when the assembly is located at the first station, identifying the assembly via the information device on the assembly and the specified integration of the first component with the assembly and, when a component is present at the assembly to be integrated with the assembly and prior to integrating the component with the assembly, determining the identity of the component via the information device on the component and integrating the component with the assembly only when the component is the first component.

43. The method of claim 42 further including the step of identifying that the assembly is at the first station by identifying the location of the information device on the assembly.

44. The method of claim 43 further including the step of determining that a component is at the first station to be integrated with the assembly by determining the location of the information device on the component.

45. The method of claim 42 wherein, when the component is other than the first component, the method further includes the step of performing a secondary function.

46. The method of claim 45 wherein the secondary function is to activate an alarm indicating that an incorrect component set is present at the first station.

47. The method of claim 45 wherein the secondary function is to locate the first component via the information device on the first component and transfer the first component to the first station to be integrated with the assembly.

48. A method for verifying that components to be integrated by a machine line station within an enterprise are the correct components prior to integration, the method comprising the steps of:
providing a separate information device on each component within the enterprise where each of the information devices indicates the identity of the component on which the device is located;
specifying that a first component is to be integrated with a second component at a first station;
when the first component is located at the first station, identifying the identities of the first and at least another component at the first station via the information devices prior to integrating the components and, when the another component is other than the second component, performing a secondary function.

49. A method for tracking work product within an environment, the method comprising the steps of:
providing environment information within the environment from which information device location can be ascertained;
providing an information device on each of the products;
at least periodically obtaining environment information via each of the information devices; and
using the environment information to determine the locations of the information devices within the environment.

50. The method of claim 49 wherein the step of providing an information device on each of the products includes the step of providing at least a receiver on each of the products, the step of providing environment information includes providing at least one transmitter within the environment for transmitting signals within the environment and the step of obtaining information including obtaining at least a sub-set of the transmitted signals within the environment.

51. The method of claim 50 wherein the step of providing an information device on each product further includes providing a processor on each of the products that is linked to the receiver and wherein the step of using the information includes causing the processor to determine the product location as a function of the obtained signals.

52. The method of claim 51 wherein the processor determines the product location by performing at least one of a triangulation method, a signal strength method and a statistical analysis method.

53. The method of claim 49 wherein the step of providing environment information includes providing position labels within the environment at spaced apart locations, the step of obtaining information from the labels when the information devices are proximate the labels.

54. The method of claim 50 wherein the step of providing the information device further includes the steps of providing a separate transmitter linked to each of the receivers, the step of using the environment information includes providing a control processor linked to an environment receiver within the environment, transmitting the environment information to the control processor via the environment receiver and using the control processor to determine the locations of the products.

55. A method for tracking components within an environment wherein resources assemble the components to form products, the method comprising the steps of:
a) providing an information device on each of at least a sub-set of the components within the environment;
b) determining the locations of each of the sub-set components; and
c) storing the location of each component in the information device that is on the component.

56. The method of claim 55 further including the step of storing identifier information on each of the information devices indicating the identity of the component on which the information device is located.

57. The method of claim 55 further including rendering the location and identifier information accessible to at least one sensor located within the environment.

58. The method of claim 55 wherein steps (b) and (c) are repeated periodically.

59. The method of claim 55 wherein the step of providing an information device includes providing a processor on each of the components that determines the location of the component.

60. The method of claim 55 further including the steps of providing at least one sensor within the environment for at least periodically obtaining location information from each of the information devices.

61. The method of claim 60 further including the step of controlling the resources at least in part as a function of the locations of the components.

62. An apparatus for tracking a component within an environment wherein resources assemble the component with other components to form products, the apparatus comprising:
a processor spatially associated with the component;
a data collector linked to the processor, the collector obtaining information from the environment from which collector location can be determined; and
a memory linked to the processor, the processor storing current component location within the memory.

63. The apparatus of claim 62 wherein processor is mounted to the component.

64. The apparatus of claim 63 for use with at least one stationary transmitter within the environment, the collector including a receiver for receiving signals transmitted by the transmitter.

65. The apparatus of claim 64 also for use with at least one receiver within the environment, the collector also including a transmitter for transmitting signals to the receiver indicating the location of the collector.

66. The apparatus of claim 62 wherein an apparatus identifier number is also stored in the memory for uniquely identifying the apparatus.

67. An assembly for tracking components within an environment wherein resources assemble the components to form products, the assembly comprising:
a server linked to at least a sub-set of the resources and programmed to control resources as a function of the locations of components within the environment; and
a plurality of tags, a separate tag spatially associated with each of the components;
wherein, at least one of the tags and the server is programmed to determine the locations of the tags within the environment.

68. The assembly of claim 67 wherein each tag includes a memory and a transmitter, a tag specific ID stored in the memory, the transmitter transmitting the tag ID within the environment.

69. The assembly of claim 68 further including at least one receiver linked to the server for receiving tag IDs transmitted within the environment.

70. The assembly of claim 69 wherein each tag also includes a processor and a tag receiver, the assembly further including at least one stationary transmitter within the environment and linked to the server, the stationary transmitter transmitting signals within the environment, the tag receivers receiving the transmitted signals from the stationary transmitter, the tag processors each using the received signals to determine the locations of the tag receivers, the tag transmitters, in addition to transmitting the tag Ids, also transmitting the tag locations to the receiver linked to the server.

71. The assembly of claim 69 wherein the server uses the tag ID signals to determine the location of the transmitting tag.
